## Europäisches Patentamt
## European Patent Office
## Office européen des brevets

(19)

(11) Publication number: **0 186 639**
**A2**

(12)

# EUROPEAN PATENT APPLICATION

(21) Application number: **85850390.7**

(22) Date of filing: **03.12.85**

(51) Int. Cl.⁴: **C 02 F 1/00**

(30) Priority: **04.12.84 FI 843485**

(43) Date of publication of application:
**02.07.86 Bulletin 86/27**

(84) Designated Contracting States:
**AT BE CH DE FR GB IT LI LU NL SE**

(71) Applicant: **Pentti Kalervo Tarkkonen**
**Pohjoisniementie 4C**
**SF-00200 Helsinki(FI)**

(72) Inventor: **Pentti Kalervo Tarkkonen**
**Pohjoisniementie 4C**
**SF-00200 Helsinki(FI)**

(74) Representative: **Bergvall, Stina-Lena et al,**
**Dr. Ludwig Brann Patentbyrä AB Box 7524 Kungsgatan 3**
**S-103 92 Stockholm(SE)**

(54) Biological method of purifying water by holding water in air-tight space.

(57) A method of purifying water containing bacteria, at which the water is held in a closed space until the bacteria have used up the nutrients present in the water and died.

EP 0 186 639 A2

Croydon Printing Company Ltd.

# BIOLOGICAL METHOD OF PURIFYING WATER BY HOLDING WATER IN AIR-TIGHT SPACE

There exist, of old, several known biological methods of purifying water in order to free water from aerobic and anaerobic bacteria, such as boiling, freezing, irradiating and adding chemicals into water. The drawback common to all known methods is the great amount of energy required.

The object of this invention is to reduce the amount of energy required.

The invention is based on the discovery that the aerobic bacteria present in the water that is held in an air-tight space consume the oxygen in the air dissolved in the available amount of water, and die in the absence of oxygen. Analogously, anaerobic bacteria die when the nutrients are used up.

0186639

CLAIM

The method of freeing water from aerobic and anaerobic bacteria, c h a r a c t e r i z e d in that the amount of water to be purified is held in an air-tight space, at which the aerobic bacteria present in the water consume the oxygen in the air contained in the air-tight space, and die in the absence of oxygen, and the anaerobic bacteria die when the nutrients are used up.